(19) Europäisches Patentamt
European Patent Office
Office européen des brevets

(11) EP 4 410 861 A1

(12) **EUROPEAN PATENT APPLICATION**
published in accordance with Art. 153(4) EPC

(43) Date of publication:
**07.08.2024 Bulletin 2024/32**

(21) Application number: **22873006.5**

(22) Date of filing: **22.09.2022**

(51) International Patent Classification (IPC):
***C08G 63/20*** *(2006.01)* ***C08G 63/183*** *(2006.01)*

(52) Cooperative Patent Classification (CPC):
**C08G 63/183; C08G 63/20**

(86) International application number:
**PCT/JP2022/035458**

(87) International publication number:
**WO 2023/048255 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 JP 2021156785**

(71) Applicant: **Toyobo Co., Ltd.**
**Kita-ku**
**Osaka-shi, Osaka 530-0001 (JP)**

(72) Inventors:
- **SASAKI Hironao**
  **Osaka-shi, Osaka 530-0001 (JP)**
- **HATANAKA Yosuke**
  **Iwakuni-shi, Yamaguchi 740-8567 (JP)**
- **TOGAWA Keiichiro**
  **Otsu-shi, Shiga 520-0292 (JP)**

(74) Representative: **Müller-Boré & Partner Patentanwälte PartG mbB**
**Friedenheimer Brücke 21**
**80639 München (DE)**

(54) **POLYESTER RESIN**

(57) An object of the present invention is to provide a polyester resin with highly reduced gelation, in addition to high moldability, surface smoothness, transparency, mechanical properties, heat resistance, thermal oxidative degradation stability, and chemical resistance.

A polyester resin comprising a constituent moiety derived from terephthalic acid as a dicarboxylic acid component and constituent moieties derived from each of ethylene glycol, 1,4-butanediol, and a compound represented by a given structure as an alcohol component, wherein the dicarboxylic acid component comprises from 85 mol% to 100 mol% of terephthalic acid, the alcohol component comprises from 85 mol% to 100 mol% of 1,4-butanediol based on a total amount of ethylene glycol and 1,4-butanediol, and the alcohol component comprises from 0.001 mass% to 5 mass% of the compound represented by the given structure in 100 mass% of the alcohol component.



Processed by Luminess, 75001 PARIS (FR)

## Description

TECHNICAL FIELD

The present invention relates to a polyester resin that enables the production of a molded article having high moldability, transparency, mechanical properties, heat resistance, thermal oxidative degradation stability, and chemical resistance. Specifically, the present invention relates to a polyester resin that enables improvements in moldability in extrusion molding, profile extrusion molding, direct blow molding, inflation molding, injection blow molding, and calendaring which require high melt tension, and also improvements in transparency, heat resistance, mechanical properties, thermal oxidative degradation stability, and chemical resistance.

BACKGROUND ART

In recent years, due to environmental concerns, there has been a trend for replacing vinyl chloride-based resins with other materials, and polyester resins have been considered as a promising material among other alternative materials due to their physical properties, environmental suitability, adhesive characteristics, and cost.

Among polyester resins, crystalline polyester resins such as polyethylene terephthalate (PET), polybutylene terephthalate (PBT), and polyethylene naphthalate (PEN) have been utilized in a variety of products produced by melt-molding, such as heat resistant parts produced by injection molding, films and sheets produced by extrusion molding, beverage bottles produced by blow molding, and fibers produced by melt spinning.

However, in order to improve transparency and flexibility of molded articles made from crystalline polyester resins, various techniques such as controlling of cooling conditions in processing and treatments of stretching processes are required.

Further, in profile extrusion molding, direct blow molding, and inflation molding, where high melt tension is required, the phenomenon of drawdown occurs prominently. The drawdown phenomenon causes sagging of a pre-molded article and a molded article, and thus increases nonuniformity in wall thickness of the molded article in addition to burr, resulting in a decrease in the production rate of quality products and a decrease in the stability of continuous production.

To solve the problem of drawdown, prior inventions discloses that moldability in direct blow molding, which requires high melt tension, is improved by introducing a branched structure (a branching agent) in a resin skeleton (for example, Patent Documents 1 to 3).

PRIOR ART DOCUMENT

PATENT DOCUMENT

Patent Document 1: JP-B2-5931061
Patent Document 2: JP-B2-5941843
Patent Document 3: JP-A-2016-56384

SUMMARY OF THE INVENTION

PROBLEMS TO BE SOLVED BY THE INVENTION

However, the techniques disclosed in Patent Documents 1 to 3 cannot provide high surface smoothness to the molded article produced from the polyester resin because a gelled material is generated even when the branching agent having high reactivity between branched structures (branching agent) is mixed with carboxylic acid compounds for the reaction with the constituent component of the polyester resin, and the solubility with the constituent component of polyester resin is decreased.

Although the problem of drawdown is improved in Patent Documents 1 to 3, too high melt tension generates melt fracture of the polyester resin discharged from a die during molding, resulting in decreases in surface smoothness and thus transparency of a molded article. In addition, the molded article of polyester resins is required to have heat resistance.

The present invention has been made against the background of such problems of the conventional technology, and it is an object of the present invention to provide the polyester resin that enables the production of a molded article with highly reduced gelation and high moldability, surface smoothness, transparency, mechanical properties, heat resistance, thermal oxidative degradation stability, and chemical resistance.

More specifically, it is an object of the present invention to provide the polyester resin that produces a molded article with highly reduced gelation, in addition to high surface smoothness, transparency, mechanical properties, heat resistance, thermal oxidative degradation stability, chemical resistance, and high moldability in extrusion molding, profile extrusion molding, direct blow molding, inflation molding, injection blow molding, and calendaring which require high melt tension.

SOLUTION TO THE PROBLEMS

As a result of diligent studies, the present inventors have found that the above problems can be solved by the following means and have arrived at the present invention. That is, the present invention has the following features.

[1] A polyester resin comprising a constituent moiety derived from terephthalic acid as a dicarboxylic acid component and constituent moieties derived from each of ethylene glycol, 1,4-butanediol, and a compound represented by the following Chemical Formula (I) as an alcohol component, wherein the dicarboxylic acid component comprises from 85 mol% to 100 mol% of terephthalic acid, the alcohol component comprises from 85 mol% to 100 mol% of 1,4-butanediol based on a total amount of ethylene glycol and 1,4-butanediol, and the alcohol component comprises from 0.001 mass% to 5 mass% of the compound represented by Chemical Formula (I) in 100 mass% of the alcohol component:

[Chemical Formula 1]

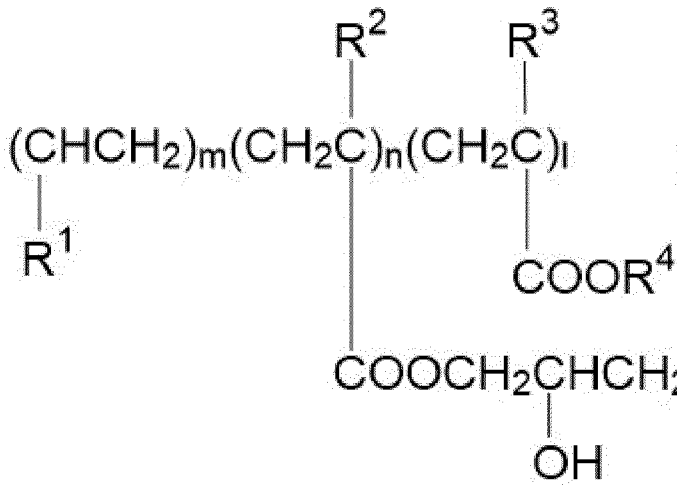

(I)

wherein in Chemical Formula (I),

m and n each represent an integer of from 1 to 1000, 1 represents an integer of from 0 to 1000, $R^1$ represents an aromatic hydrocarbon group having 6 to 20 carbon atoms, $R^2$, $R^3$, and $R^4$ each represent a hydrogen atom or an alkyl group having 1 to 10 carbon atoms, and $R^5$ represents a mono-ol having 4 carbon atoms represented as $CH_2CH_2CH_2CH_2OH$.

[2] The polyester resin according to [1], wherein the compound represented by Chemical Formula (I) has a weight average molecular weight of 275 or more and 500000 or less.

[3] The polyester resin according to [1] or [2], wherein the polyester resin has a melt tension of 15 mN or more as measured under conditions of a temperature of 270°C, a take-up speed of 100 m/min, and a shear rate of 243 $s^{-1}$.

[4] The polyester resin according to any one of [1] to [3], wherein the polyester resin has a melt viscosity of 26000 dPa s or more as measured under conditions of a temperature of 270°C and a shear rate of 30 $s^{-1}$ and 6500 dPa s or less as measured under conditions of a temperature of 270°C and a shear rate of 2000 $s^{-1}$

EFFECTS OF THE INVENTION

According to the present invention, the molded article with highly reduced gelation, in addition to high moldability, surface smoothness, transparency, mechanical properties, heat resistance, thermal oxidative degradation stability, and

chemical resistance can be obtained from the polyester resin.

In particular, the moldability is higher compared to the past in extrusion molding, profile extrusion molding, direct blow molding, inflation molding, injection blow molding, and calendaring, which require higher melt tension.

## MODE FOR CARRYING OUT THE INVENTION

### 1. Polyester resin

A polyester resin of the present invention comprises a constituent moiety derived from terephthalic acid as a dicarboxylic acid component and constituent moieties derived from each of ethylene glycol, 1,4-butanediol, and a compound represented by the following Chemical Formula (I) as an alcohol component, wherein the dicarboxylic acid component comprises from 85 mol% to 100 mol% of terephthalic acid, the alcohol component comprises from 85 mol% to 100 mol% of 1,4-butanediol based on a total amount of ethylene glycol and 1,4-butanediol, and the alcohol component comprises from 0.001 mass% to 5 mass% of the compound represented by Chemical Formula (I) in 100 mass% of the alcohol component.

[Chemical Formula 2]

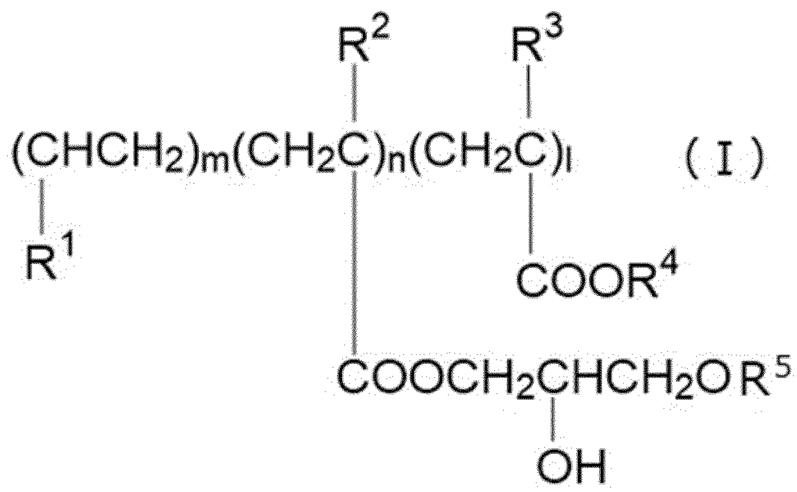

(I)

In Chemical Formula (I),

m and n each represent an integer of from 1 to 1000, 1 represents an integer of from 0 to 1000, $R^1$ represents an aromatic hydrocarbon group having 6 to 20 carbon atoms, $R^2$, $R^3$, and $R^4$ each represent a hydrogen atom or an alkyl group having 1 to 10 carbon atoms, and $R^5$ represents a mono-ol having 4 carbon atoms represented as $CH_2CH_2CH_2CH_2OH$.

The polyester resin of the present invention contains a polymer formed from a predetermined dicarboxylic acid component and a predetermined alcohol component, and the polyester resin has the characteristic that the alcohol component comprises a predetermined amount of the compound represented by Chemical Formula (I).

In the present invention, the compound represented by Chemical Formula (I) is a branching agent for the polyester resin and is used along with a diol component generally used.

The compound represented by Chemical Formula (I) also has two or more functional groups (hydroxyl groups) per molecule capable of reacting with carboxy groups of the dicarboxylic acid component, thereby enabling partial introduction of the branched structure throughout the polyester resin.

Accordingly, since the polyester resin of the present invention comprises the compound represented by Chemical Formula (I), gelation is reduced. Also, since the melt tension decreases with an increase in temperature and the melt viscosity decreases with an increase in shear rate during melt extrusion, melt fracture can be greatly decreased during molding, resulting in high moldability, surface smoothness, transparency, mechanical properties, heat resistance, thermal oxidative degradation stability, and chemical resistance.

The compound represented by Chemical Formula (I) is as follows.

[Chemical Formula 3]

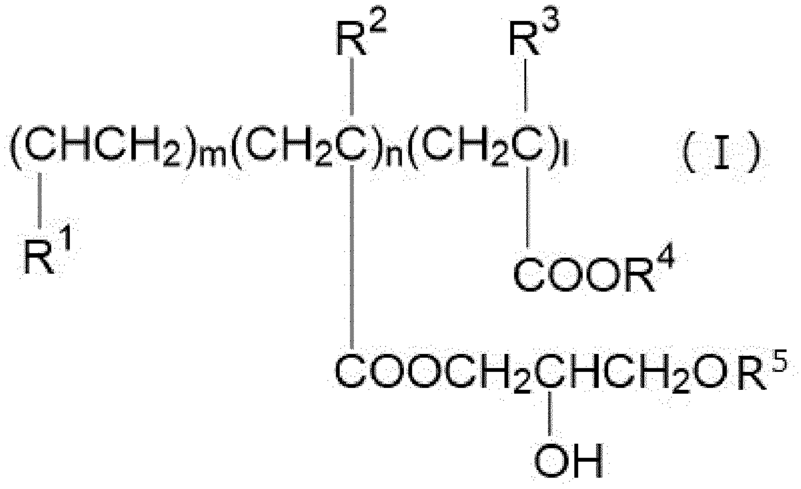

(I)

In Chemical Formula (I),
m and n each represent an integer of from 1 to 1000, 1 represents an integer of from 0 to 1000, $R^1$ represents an aromatic hydrocarbon group having 6 to 20 carbon atoms, $R^2$, $R^3$, and $R^4$ each represent a hydrogen atom or an alkyl group having 1 to 10 carbon atoms, and $R^5$ represents a mono-ol having 4 carbon atoms represented as $CH_2CH_2CH_2CH_2OH$.

In the formula, $R^1$ represents an aromatic hydrocarbon group having 6 to 20 carbon atoms.

Examples of the aromatic hydrocarbon group having 6 to 20 carbon atoms represented by $R^1$ include phenyl group, o-tolyl group, m-tolyl group, p-tolyl group, 2-ethylphenyl group, 3-ethylphenyl group, 4-ethylphenyl group, 2,3-dimethylphenyl group, 2,4-dimethylphenyl group, 2,5-dimethylphenyl group, 2,6-dimethylphenyl group, 3,4-dimethylphenyl group, 3,5-dimethylphenyl group, 4-vinylphenyl group, o-isopropylphenyl group, m-isopropylphenyl group, p-isopropylphenyl group, o-tert-butylphenyl group, m-tert-butylpheny group, p-tert-butylpheny group, 3,5-di-(tert-butyl)phenyl group, 3,5-di-(tert-butyl)-4-methylphenyl group, 4-butylphenyl group, 4-pentylphenyl group, 2,6-bis(1-methylethyl)phenyl group, 2,4,6-tris(1-methylethyl)phenyl group, 4-cyclohexylphenyl group, 2,4,6-trimethylphenyl group, 4-octylphenyl group, 4-(1,1,3,3-tetramethylbutyl)phenyl group, 1-naphthyl group, 2-naphthyl group, 5,6,7,8-tetrahydro-1-naphthyl group, 5,6,7,8-tetrahydro-2-naphthyl group, and fluorenyl group.

The aromatic hydrocarbon group preferably has from 6 to 18 carbon atoms, more preferably from 6 to 15 carbon atoms, and further preferably from 6 to 12 carbon atoms.

Among them, the aromatic hydrocarbon group is particularly preferably a phenyl group, an o-tolyl group, an m-tolyl group, or a p-tolyl group, and most preferably a phenyl group.

In the formula, each of $R^2$, $R^3$, and $R^4$ represents a hydrogen atom or an alkyl group having 1 to 10 carbon atoms.

Examples of the alkyl groups having 1 to 10 carbon atoms represented by $R^2$, $R^3$, and $R^4$ include linear alkyl groups such as methyl group, ethyl group, propyl group, butyl group, pentyl group, hexyl group, heptyl group, octyl group, nonyl group, and decyl group; branched-chain alkyl groups such as isopropyl group, isobutyl group, sec-butyl group, tert-butyl group, 2-ethylbutyl group, 3,3-dimethylbutyl group, 1,1,3,3-tetramethylbutyl group, 1-methylbutyl group, 1-ethylpropyl group, 3-methylbutyl group, neopentyl group, 1,1-dimethylpropyl group, 2-methylpentyl group, 3-ethylpentyl group, 1,3-dimethylbutyl group, 2-propylpentyl group, 1-ethyl-1,2-dimethylpropyl group, 1-methylpentyl group, 4-methylpentyl group, 4-methylhexyl group, 5-methylhexyl group, 2-ethylhexyl group, 1-methylhexyl group, 1-ethylpentyl group, 1-propylbutyl group, 3-ethylheptyl group, 2,2-dimethylheptyl group, 1-methylheptyl group, 1-ethylhexyl group, 1-propylpentyl group, 1-methyloctyl group, 1-ethylheptyl group, 1-propylhexyl group, 1-butylpentyl group, 1-methylnonyl group, 1-ethyloctyl group, 1-propylheptyl group, and 1-butylhexyl group; cycloalkyl groups such as cyclopropyl group, 1-methylcyclopropyl group, cyclobutyl group, cyclopentyl group, cyclohexyl group, cycloheptyl group, 1-methylcyclohexyl group, 2-methylcyclohexyl group, 3-methylcyclohexyl group, 4-methylcyclohexyl group, 1,2-dimethylcyclohexyl group, 1,3-dimethylcyclohexyl group, 1,4-dimethylcyclohexyl group, 2,3-dimethylcyclohexyl group, 2,4-dimethylcyclohexyl group, 2,5-dimethylcyclohexyl group, 2,6-dimethylcyclohexyl group, 3,4-dimethylcyclohexyl group, 3,5-dimethylcyclohexyl group, 2,2-dimethylcyclohexyl group, 3,3-dimethylcyclohexyl group, 4,4-dimethylcyclohexyl group, cyclooctyl group, 2,4,6-trimethylcyclohexyl group, 2,2,6,6-tetramethylcyclohexyl group, and 3,3,5,5-tetramethylcyclohexyl group.

The alkyl group preferably has from 1 to 8 carbon atoms, more preferably from 1 to 6 carbon atoms, and further preferably from 1 to 4 carbon atoms.

Among them, the alkyl group is particularly preferably a methyl group, an ethyl group, a propyl group, or a butyl

group, and most preferably a methyl group.

In the formula, each of $R^2$ and $R^3$ represents an alkyl group having 1 to 10 carbon atoms and $R^4$ is preferably a hydrogen atom.

$R^5$ is a mono-ol having 4 carbon atoms, i.e., a 4-hydroxybutyl group, represented as $CH_2CH_2CH_2CH_2OH$.

The values of l, m, and n represent the ratios of the copolymerization components (L), (M), and (N) in one molecule, and the values (ratio) represent the average numbers of the components in one molecule by integers obtained by rounding to one decimal place. The ratio and the average number of each component in one molecule are obtained by $^1H$-NMR and $^{13}C$-NMR.

[Chemical Formula 4]

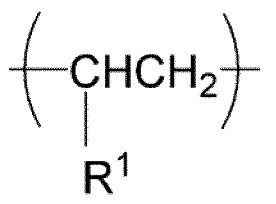
(M)

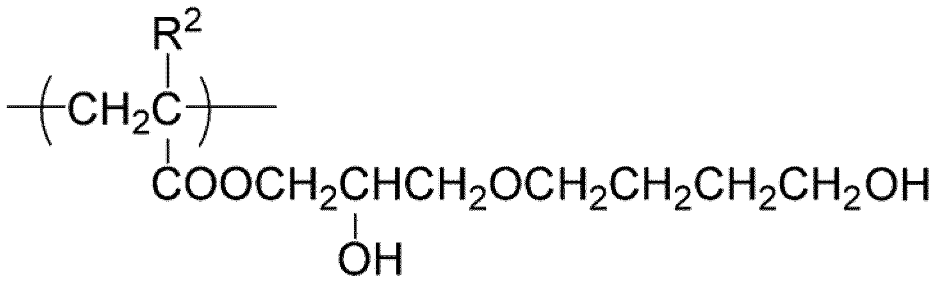
(N)

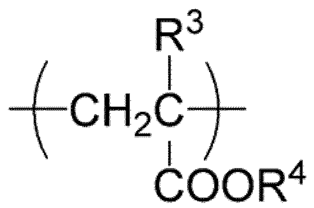
(L)

In the formula, each of m and n may have the same or different value; each of m and n is an integer of from 1 to 1000, preferably an integer of from 2 to 800, more preferably an integer of from 5 to 600, and further preferably an integer of from 10 to 400.

In the formula, 1 is an integer of from 0 to 1000, preferably an integer of from 1 to 700, more preferably an integer of from 2 to 400, and further preferably an integer of from 5 to 100.

The compound represented by Chemical Formula (I) may be a random copolymer formed by random copolymerization of copolymerization components (L), (M), and (N) or a block copolymer in which at least one copolymerization components from (L), (M), and (N) forms a block, and a random copolymer is preferred.

The polyester resin of the present invention may contain one or two or more polyester resins as long as the above m, n, and 1 are satisfied.

For example, the compound represented by Chemical Formula (I) can be prepared in a 2-gallon reactor for free radical continuous polymerization with reference to descriptions in Patent Documents 1 to 3 and U.S. Patent Application Nos. 09/354350 and 09/614402.

The content of the compound represented by Chemical Formula (I) is from 0.001 mass% to 5 mass%, preferably from 0.005 mass% to 5 mass%, further preferably from 0.01 mass% to 4.5 mass%, further more preferably 4 mass% or less, and particularly preferably 3.5 mass% or less in 100 mass% of the alcohol component forming the constituent moiety of the polyester resin.

When the content of the compound represented by Chemical Formula (I) is less than 0.001 mass%, drawdown is caused during molding, resulting in unstable molding. Even if molded, the resulting molded article may have uneven thickness. The content of the compound represented by Chemical Formula (I) of more than 5 mass% causes gelation in addition to the occurrence of melt fracture during molding, resulting in the molded article with devitrification and decreased surface smoothness In addition, the molded article may result in a low-quality product containing gel.

The compound represented by Chemical Formula (I) may have a predetermined weight average molecular

weight. The weight average molecular weight of the compound represented by Chemical Formula (I) is preferably 275 or more and 500000 or less, more preferably 500 or more, further preferably 700 or more, further more preferably 1000 or more, more preferably 300000 or less, further preferably 100000 or less, and further more preferably 50000 or less.

When the compound represented by Chemical Formula (I) has a weight average molecular weight of less than 275, unreacted compounds may migrate on the surface of a molded article due to bleed out, causing contamination of the surface of the molded article. When the compound represented by Chemical Formula (I) has a weight average molecular weight of more than 500000, compatibility between the compound and the polyester resin may be lowered and thus a void may be generated, resulting in whitening of a molded article formed from the polyester resin when bent.

The weight average molecular weight can be determined, for example, by GPC based on standard polystyrene.

Specifically, the weight average molecular weight can be determined by weighing out 4 mg of the compound represented by Chemical Formula (I), dissolving the compound into 4 ml of a mixed solvent of chloroform and hexafluoroisopropanol (60/40, volume%), filtrating the resulting solution through a membrane filter of 0.2 pm, and measuring the filtrated sample solution by GPC followed by conversion of the results based on the standard polystyrene.

The dicarboxylic acid component and the alcohol component in the present invention are as follows.

Examples of the dicarboxylic acid component include; saturated aliphatic dicarboxylic acids such as oxalic acid, malonic acid, succinic acid, glutaric acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimer acid, and ester-forming derivatives thereof (for example, alkyl esters thereof with carbon numbers of 1 or more and 20 or less); unsaturated aliphatic dicarboxylic acids such as fumaric acid, maleic acid, and itaconic acid, and ester-forming derivatives thereof (for example, alkyl esters thereof with carbon numbers of 1 or more and 20 or less); and aromatic dicarboxylic acids such as orthophthalic acid, isophthalic acid, terephthalic acid, 5-(alkali metal)sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4'-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracenedicarboxylic acid, and ester-forming derivatives thereof (for example, alkyl esters thereof with carbon numbers of 1 or more and 20 or less, and preferably dimethyl terephthalate).

Among the dicarboxylic acid component, isophthalic acid, terephthalic acid, and naphthalenedicarboxylic acid are preferred, and terephthalic acid is particularly preferred due to physical properties of the resulting polyester resin.

In addition to the dicarboxylic acid, a trivalent to tetravalent carboxylic acid may be used in a little amount.

Examples of the carboxylic acid include ethanoic acid, tricarboxylic acid, propanetricarboxylic acid, butanetetracarboxylic acid, pyromellitic acid, trimellitic acid, trimesic acid, and 3,4,3',4'-biphenyltetracarboxylic acid, and ester-forming derivatives thereof (for example, alkyl esters thereof with carbon numbers of 1 or more and 20 or less).

The alcohol component other than the compound represented by Chemical Formula (I) is preferably a diol component. In 100 mass% of the alcohol component, the alcohol component comprises the diol component in an amount of from 99.999 mass% to 95 mass%, more preferably from 99.995 mass% to 95 mass%, further preferably from 99.99 mass% to 95.5 mass%, further more preferably 96 mass% or more, and particularly preferably 96.5 mass% or more.

The diol component essentially comprises 1,4-butanediol and preferably comprises ethylene glycol. Other than 1,4-butanediol and ethylene glycol, examples of the diol component include aliphatic glycols such as 1,2-propylene glycol, 1,3-propylene glycol, diethylene glycol, triethylene glycol, 1,2-butylene glycol, 1,3-butylene glycol, 2,3-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, isosorbide, polyethylene glycol, polytrimethylene glycol, polytetramethylene glycol, and fluorenediol; aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol F, bisphenol S, bisphenol C, 2,5-naphthalenediol, glycols with ethylene oxides added to the above aromatic glycols, and glycols of hydrogenated bisphenol A, F, S, and C.

In addition to the diol component, a trivalent to tetravalent alcohol, a hydroxycarboxylic acid, or a cyclic ester may be used as the diol component.

Examples of the trivalent to tetravalent alcohol include trimethylolmethane, trimethylolethane, trimethylolpropane, pentaerythritol, glycerol, and hexanetriol.

Examples of the hydroxycarboxylic acid include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid, and ester-forming derivatives thereof (for example, alkyl esters thereof with carbon numbers of 1 or more and 20 or less).

Examples of the cyclic ester include ε-caprolactone, β-propiolactone, β-methyl-β-propiolactone, δ-valerolactone,

glycolide, and lactide.

In the polyester resin of the present invention, the dicarboxylic acid component comprises from 85 mol% to 100 mol% of terephthalic acid in 100 mol% of the dicarboxylic acid component, and the alcohol component preferably comprise totally from 85 mol% to 100 mol% of ethylene glycol and 1,4-butanediol in a 100 mol% of the alcohol component.

The dicarboxylic acid component comprises terephthalic acid in an amount of more preferably from 90 mol% to 100 mol%, further preferably from 95 mol% to 100 mol% in 100 mol% of the dicarboxylic acid component, and the alcohol component comprises ethylene glycol and 1,4-butanediol in a total amount of more preferably from 90 mol% to 100 mol%, and further preferably from 95 mol% to 100 mol% in 100 mol% of the alcohol component.

The alcohol component comprises from 85 mol% to 100 mol% of 1,4-butanediol based on a total amount of ethylene glycol and 1,4-butanediol, i.e., the alcohol component comprises from 15 mol% to 0 mol% of ethylene glycol based on a total amount of ethylene glycol and 1,4-butanediol. In other words, the alcohol component comprises from 0 mol% to 15 mol% of ethylene glycol and from 85 mol% to 100 mol% of 1,4-butanediol in 100 mol% of the alcohol component. The content of 1,4-butanediol based on a total amount of ethylene glycol and 1,4-butanediol is preferably from 87 mol% to 100 mol%, more preferably from 90 mol% to 100 mol%, and further preferably from 93 mol% to 100 mol%. The content of 1,4-butanediol of less than 85 mol% may lead to decreases in moldability and chemical resistance.

The polyester resin of the present invention is preferably a copolymerized polybutylene terephthalate resin.

The polyester resin of the present invention is a crystalline polyester resin having a branched structure, improved processability such as moldability due to "melt strength enhancement" by an increase in molecular weight, and melt tension and melt viscosity capable of being adjusted, therefore, the resulting molded article can have resistance to whitening upon bending of the molded article and can reduce bleed out of the unreacted matter on the surface of the molded article.

When the contents of ethylene glycol and 1,4-butanediol are out of the ranges, an amorphous polyester resin is obtained, the polyester resin having high viscosity is not obtained with solid phase polymerization, and the molded article having high mechanical properties is not obtained in some cases.

The polyester resin of the present invention may have a predetermined intrinsic viscosity (IV).

The intrinsic viscosity (IV) of the polyester resin is preferably from 0.40 dl/g to 2.10 dl/g, more preferably from 0.50 dl/g to 1.90 dl/g, and further preferably from 0.60 dl/g to 1.70 dl/g.

The intrinsic viscosity (IV) can be determined by dissolving the polyester resin into a mixed solution of p-chlorophenol/tetrachloroethane (3/1, weight ratio) and then measuring the resulting solution at 30°C with an Ostwald viscometer.

The polyester resin used in the present invention has an acid value (AV) of preferably 100 eq/$10^6$g (ton) or less, more preferably 60 eq/$10^6$g or less, and further preferably 50 eq/$10^6$g or less. A lower limit with a lower value is preferred, and the lower limit closer to 0 eq/$10^6$g is preferred. The acid value of more than 100 eq/$10^6$g may cause generation of gel, resulting in decreases in surface smoothness and haze.

The acid value is determined by dissolving the polyester resin sample into an alcohol and/or an ether solution and titrating the resulting solution with alcoholic sodium hydroxide solution or alcoholic potassium hydroxide solution along with phenolphthalein reagent as an indicator. The specific method for measuring the acid value is described in Examples.

The polyester resin of the present invention may have a predetermined melting point. The melting point of the polyester resin is preferably from 190°C to 230°C, more preferably from 200°C to 230°C, further preferably from 210°C to 230°C, and further more preferably 225°C or less.

To determine the melting point, a polyester resin sample is heated up to 300°C at a heating rate of 20°C/min with a differential scanning calorimeter (DSC), and a maximum peak temperature of the heat of fusion is determined as a melting point of crystals.

The polyester resin of the present invention is manufactured preferably with the polymerization catalyst containing at least an aluminum compound and a phosphorus compound, and the aluminum content and the phosphorus content originating from the polymerization catalysts are preferably from 3 ppm to 1000 ppm and from 5 ppm to 10000 ppm, respectively.

As another polymerization catalyst, at least one selected from a titanium compound and a germanium compound may also be used.

The aluminum compound is preferably at least one selected from aluminum acetate, basic aluminum acetate, aluminum chloride, aluminum hydroxide, and aluminum hydroxychloride, more preferably at least one selected from aluminum acetate and basic aluminum acetate, and further preferably aluminum acetate.

The content of aluminum is, as an aluminum atom, preferably from 3 ppm to 1000 ppm, more preferably from 5 ppm to 800 ppm, and further preferably from 8 ppm to 500 ppm based on the total mass of the polyester resin. Low aluminum content may decrease polymerization activity, and high aluminum content may cause large amounts of foreign substances originating from aluminum.

The phosphorus compound is preferably at least one selected from a phosphonic acid compound and a phosphinic acid compound, and more preferably a phosphonic acid compound.

The phosphorus compound preferably has phenolic structure in the same molecule, and the phosphorus compound is more preferably at least one selected from a phosphonic acid compound and a phosphinic acid compound each having phenolic structure in the same molecule, and further preferably a phosphonic acid compound having phenolic structure in the same molecule.

Examples of the phosphorus compound having phenolic structure in the same molecule include p-hydroxyphenylphosphonic acid, dimethyl p-hydroxyphenylphosphonate, diethyl p-hydroxyphenylphosphonate, diphenyl p-hydroxyphenylphosphonate, bis(p-hydroxyphenyl)phosphinic acid, methyl bis(p-hydroxyphenyl)phosphinate, phenyl bis(p-hydroxyphenyl)phosphinate, p-hydroxyphenylphenyl phosphinic acid, methyl p-hydroxyphenylphenylphosphinate, phenyl p-hydroxyphenylphenylphosphinate, p-hydroxyphenylphosphinic acid, methyl p-hydroxyphenylphosphinate, and phenyl p-hydroxyphenylphosphinate, and diethyl 3,5-di-tert-butyl-4-hydroxybenzylphosphonate.

Among them, diethyl 3,5-di-tert-butyl-4-hydroxybenzylphosphonate is particularly preferred as the phosphorus compound. For example, Irgamod (registered trademark) 295 (manufactured by BASF) can be used as the phosphorus compound.

The content of phosphorus is, as a phosphorus atom, preferably from 5 ppm to 10000 ppm, more preferably from 8 ppm to 8000 ppm, and further preferably from 10 ppm to 6000 ppm based on the total mass of the polyester resin. Low phosphorus content may decrease polymerization activity and thus cause large amounts of foreign substances originating from aluminum and high phosphorus content may increase catalyst cost.

Examples of the titanium compound include tetrabutyl titanate, tetrabenzyltitanium, tetra-n-propyl titanate, tetraisopropyl titanate, tetra-n-butyl titanate, tetraisobutyl titanate, tetra-tert-butyl titanate, tetracyclohexyl titanate, tetraphenyl titanate, tetrabenzyl titanate, lithium oxalate titanate, potassium oxalate titanium, ammonium oxalate titanate, titanium oxide, composite oxide of titanium with silicon, zirconium, alkali metal, or alkaline earth metal, orthoester or condensation orthoester of titanium, reaction product composed of orthoester or condensation orthoester of titanium and hydroxycarboxylic acid, reaction product composed of orthoester or condensation orthoester of titanium, hydroxycarboxylic acid, and phosphorus compound, and reaction product composed of orthoester or condensation orthoester of titanium, polyol having at least two hydroxyl groups, 2-hydroxycarboxylic acid, and base. Among them, a composite oxide of titanium with silicon, a composite oxide of titanium with magnesium, and a reaction product composed of orthoester or condensation orthoester of titanium, hydroxycarboxylic acid, and phosphorus compound are preferred.

The content of titanium is, as a titanium atom, preferably from 1 ppm to 300 ppm, more preferably from 2 ppm to 200 ppm, and further preferably from 3 ppm to 100 ppm based on the total mass of the polyester resin.

Examples of the germanium compound include germanium dioxide and germanium acetate.

The content of germanium is, as a germanium atom, preferably from 1 ppm to 500 ppm, more preferably from 2 ppm to 400 ppm, and further preferably from 3 ppm to 300 ppm based on the total mass of the polyester resin.

The content of the atoms can be calculated, for example, by X-ray fluorescence analysis.

The polyester resin of the present invention preferably has a predetermined melt tension and melt viscosity on melt.

The polyester resin of the present invention has a characteristic that the melt tension decreases as the temperature increases at 250°C or higher.

The polyester resin of the present invention has a melt tension of preferably 15 mN or more, more preferably 17 mN or more, further preferably 19 mN or more as measured under conditions of a temperature of 270°C, a take-up speed of 100 m/min, and a shear rate of 243 $s^{-1}$ to achieve performance equivalent to or higher than that of high-density polyethylene. The upper limit of the melt tension is, for example, 170 mN or less or 120 mN or less.

The melt tension can be determined, for example, with a capillary rheometer under predetermined conditions (capillary length: 10 mm, capillary diameter: 1 mm, temperature: 270°C, shear rate: 243 $s^{-1}$, maximum take-up speed: 200 m/min, starting speed of take-up: 10 m/min, take-up speed: 100 m/min (constant), take-up time: 90 sec).

The polyester resin of the present invention also has a characteristic that melt viscosity decreases as the temperature increases at 250°C or higher as measured at a shear rate of 2000 $s^{-1}$ on melt.

The polyester resin of the present invention has a melt viscosity of 26000 dPa s or more as measured under conditions of a temperature of 270°C and a shear rate of 30 $s^{-1}$, and preferably 6500 dPa s or less as measured under conditions of a temperature of 270°C and a shear rate of 2000 $s^{-1}$ in order to reduce the occurrence of melt fracture during melt extrusion. The polyester resin of the present invention exhibits thixotropy at high temperature on melt and thus the occurrence of melt fracture can be reduced, resulting in good moldability.

The polyester resin has a melt viscosity of preferably 26000 dPa s or more, more preferably 28000 dPa s or more, further preferably 30000 dPa s or more as measured under conditions of a temperature of 270°C and a shear rate of 30 $s^{-1}$, and the upper limit of the melt viscosity is, for example, 50000 dPa s or less or 45000 dPa s or less.

The melt viscosity can be measured in accordance with, for example, JIS K 7199.

The polyester resin has a melt viscosity of preferably 6500 dPa s or less, more preferably 6300 dPa s or less, further preferably 6200 dPa s or less as measured under conditions of a temperature of 270°C and a shear rate of 2000

$s^{-1}$, and the lower limit of the melt viscosity is, for example, 5500 dPa s or more.

The melt viscosity can be determined, for example, with a capillary rheometer under predetermined conditions (capillary length: 10 mm, capillary diameter: 1 mm, temperature: 270°C, shear rate: 30 $s^{-1}$ or 2000 $s^{-1}$).

The polyester resin of the present invention may have a predetermined thermal oxidative degradation parameter (TOD) and a predetermined thermal degradation parameter (TD) from the viewpoint of heat-resistance. The polyester resin has a thermal oxidative degradation parameter (TOD) of preferably 0.390 or less. TOD can be calculated by a method described in an item in the following Examples. TOD is more preferably 0.385 or less, further preferably 0.380 or less, particularly preferably 0.375 or less, and most preferably 0.370 or less. The lower limit of TOD is, for example, 0.010 or more or 0.020 or more. TOD of more than 0.390 may cause decreased moldability due to drawdown.

The polyester resin has a thermal degradation parameter (TD) of preferably 0.55 or less. TD can be calculated by a method described in an item in the following Examples. TD is more preferably 0.54 or less, further preferably 0.53 or less, particularly preferably 0.52 or less, and most preferably 0.50 or less. The lower limit of TD is, for example, 0.18 or more or 0.020 or more. TD of more than 0.50 may cause decreased moldability due to drawdown.

The polyester resin of the present invention may contain additives such as organic, inorganic, and organometallic toners, and a fluorescent brightener. By containing one or two or more of these additives, yellowing or other coloration of the polyester resin can be controlled to an even better level. The polyester resin may also contain any other polymer, a static controller, a defoaming agent, a die improver, a dye, a pigment, a delustering agent, a fluorescent brightener, a stabilizer, an antioxidant, and other additives. As the antioxidant, antioxidants of aromatic amine or phenol type may be used. As the stabilizer, stabilizers of phosphorus type, such as phosphoric acid type and phosphoric acid ester type, sulfur type, or amine type may be used.

The polyester resin is directly introduced into the molding process in a melt state after the completion of the melt polycondensation process as described above, or in chip form after the completion of treatments such as solid-phase polymerization to produce a molded product. Alternatively, a predetermined amount of additives, such as a crystal nucleating agent, an aldehyde reducing agent, a color improver, and a stabilizer is added to any reactor or transport pipeline in the production process of a polymer by melt polycondensation, then melt polycondensation reaction is conducted to achieve desired characteristics, and the resulting polymer with or without further treatments such as solid-phase polymerization is directly introduced into the molding process to produce a molded product.

The molded article formed from the polyester resin of the present invention may has a predetermined three-dimensional center plane average surface roughness (SRa). The molded article of the polyester resin has SRa of preferably less than 0.15 pm, more preferably 0.14 pm or less, further preferably 0.13 pm or less, further more preferably 0.12 pm or less, and preferably 0.01 pm or more or 0.02 pm or more.

The three-dimensional center plane average surface roughness (SRa) can be determined, for example, by using a roughness measuring device (surface roughness measuring instrument, Surfcorder ET4000A, manufactured by Kosaka Laboratory Ltd.).

2. Method for producing polyester resin

The polyester resin of the present invention can be produced by a conventionally known method. For example, PBT is produced by direct esterification method in which esterification is first performed by directly reacting terephthalic acid, 1,4-butanediol, and, if necessary, other copolymerization components with distilling off of water, followed by subsequent polycondensation under reduced pressure. Alternatively, PBT is produced by transesterification method in which transesterification is first performed by reacting dimethyl terephthalate, 1,4-butanediol, and, if necessary, with other copolymerization components with distilling off of methyl alcohol, followed by subsequent polycondensation under reduced pressure. Further, if necessary, solid-phase polymerization may be performed to increase intrinsic viscosity. In order to promote crystallization of the polyester resin before solid-phase polymerization, the polyester resin obtained by melt polymerization is allowed to absorb moisture and crystallized by heating, or water vapor is sprayed directly onto polyester chips followed by crystallization by heating.

As to the method for adding the compound represented by Chemical Formula (I), the compound is preferably added in the polymerization process.

The compound represented by Chemical Formula (I) may be added in dispersed state.

The polycondensation reaction may be performed in a batch reactor or in a continuous reactor. In either method, esterification reaction and transesterification reaction may be carried out in one stage or separately in multiple stages. The polycondensation reaction can be carried out in one stage or separately in multiple stages. Like the polycondensation reaction, the solid-phase polymerization reaction can be carried out in a batch reactor or in a continuous reactor. The polycondensation reaction and the solid-phase polymerization reaction can be carried out in succession or separately.

An exemplary preferred method for manufacturing a polyester resin in a continuous manner will now be described with an example of PBT as a polyester resin.

The esterification reaction is carried out with reflux of 1,4-butanediol while water or alcohol produced in the

reaction is being removed from the system through a rectifying column, in multi-stage apparatus including 1 to 3 esterification reactors connected in series. A temperature for the esterification reaction at the first stage is preferably from 240°C to 270°C, more preferably from 245°C to 265°C, a pressure for the esterification reaction at the first stage is preferably from 0.2 kg/$cm^2$G to 3 kg/$cm^2$G, and more preferably from 0.5 kg/$cm^2$G to 2 kg/$cm^2$G. At the final stage, a temperature for the esterification reaction is normally from 250°C to 290°C, preferably from 255°C to 275°C, a pressure for the esterification reaction is normally from 0 kg/$cm^2$G to 1.5 kg/$cm^2$G, and preferably from 0 kg/$cm^2$G to 1.3 kg/$cm^2$G. In case where the esterification reaction is carried out in 3 or higher stages, the reaction conditions in the middle stages of the esterification reaction are set between the conditions in the first stage and the final stage. The increases in the reaction rates in these stages of the esterification reaction are preferably distributed smoothly among the stages. The reaction rate of esterification finally reaches preferably 90% or more, and more preferably 93% or more. Low-order condensate having a molecular weight of about 500 to 5000 can be obtained by the esterification reaction.

In case where terephthalic acid is used as a raw material in the esterification reaction, the reaction can be carried out without catalyst because terephthalic acid has a catalytic action as an acid, however, the reaction may be carried out under the coexistence of a polycondensation catalyst.

The polycondensation reaction is carried out preferably with the addition of little amount of tertiary amines such as triethylamine, tri-n-butylamine, and benzyldimethylamine; a quaternary ammonium hydroxide such as tetraethylammonium hydroxide, tetra-n-butylammonium hydroxide, and trimethylbenzylammonium hydroxide; and basic compounds such as lithium carbonate, sodium carbonate, potassium carbonate, and sodium acetate. The compound added in a little amount allows the proportion of the dioxybutylene terephthalate component unit in the main chain of polybutylene terephthalate to be maintained at a relatively low level (5 mol% or less based on the whole diol component).

In the production of low molecular weight polymer by transesterification reaction, a solution containing preferably from 1.1 mol to 3.0 mol, more preferably from 1.2 mol to 2.5 mol of 1,4-butanediol with respect to 1 mol of dimethyl terephthalate is prepared, and the resulting solution is continuously fed to the transesterification reaction process.

The transesterification reaction is carried out with the reflux of 1,4-butanediol while methanol produced in the reaction is being removed from the system out of a rectifying column, in apparatus including from 1 to 2 esterification reactors connected in series. A temperature for the transesterification reaction at the first stage is preferably from 180°C to 250°C, more preferably from 200°C to 240°C, a temperature for the transesterification reaction at the final stage is normally from 220°C to 260°C, and preferably from 230°C to 265°C. Examples of the transesterification catalysts include fatty acid salts or carbonates of Zn, Cd, Mg, Mn, Co, Ca, and Ba and oxides of Pb, Zn, Sb, and Ge. The transesterification reaction conducted under such conditions gives a low-order condensate having a molecular weight of from about 200 to 500. Among these transesterification catalysts, a zinc compound (Zn compound) is a catalyst effective for esterification reaction and also polycondensation reaction and can be used in those reactions.

Subsequently, the low-order condensate thus obtained is fed to a liquid phase polycondensation step at multistage. The polycondensation reaction conditions are as follows. A temperature for the polycondensation reaction at the first stage is preferably from 240°C to 280°C, more preferably from 240°C to 270°C, a pressure for the polycondensation reaction at the first stage is preferably from 500 Torr to 20 Torr, and more preferably from 200 Torr to 30 Torr. A temperature for the polycondensation reaction at the final stage is preferably from 265°C to 280°C, more preferably from 265°C to 275°C, a pressure for the polycondensation reaction at the final stage is preferably from 10 Torr to 0.1 Torr, and more preferably from 5 Torr to 0.5 Torr. In case where the polycondensation reaction is carried out in 3 or higher stages, the reaction conditions in the middle stages of the polycondensation reaction are set between the conditions in the first stage and the final stage. The increases in intrinsic viscosities achieved in these stages of the polycondensation reaction are preferably distributed smoothly.

Subsequently, the polyester resin obtained by polycondensation is subjected to solid-phase polymerization. The polyester resin can be polymerized in solid-phase by a conventionally known method. The polyester resin that will be subjected to solid-phase polymerization is first pre-crystallized by heating, for example, at a temperature of from 100°C to 190°C for from 1 to 5 hours in an inert gas, under reduced pressure, in an atmosphere of water vapor, or in an atmosphere of an inert gas containing water vapor. Subsequently, solid-phase polymerization is performed at a temperature of from 180°C to 220°C for from 1 to 100 hours in an atmosphere of an inert gas or under reduced pressure.

The catalyst used in the present invention has catalytic activity not only in polycondensation reaction but also in esterification and transesterification reactions. For example, the catalyst can be used in transesterification reaction of alkyl esters of dicarboxylic acid such as dimethyl terephthalate and glycols such as 1,4-butanediol. The catalyst used in the present invention has catalytic activity not only in melt polymerization but also in solid-phase polymerization and solution polymerization, therefore, the polyester resin can be produced by any one of these methods.

The polymerization catalyst used in the present invention can be added to the reaction system at any stage of the polymerization reaction. For example, the polymerization catalyst can be added to the reaction system before the start of the esterification reaction or the transesterification reaction, at any stage during the esterification reaction or the transesterification reaction, right before the start of the polycondensation reaction, or at any stage during the polycondensation reaction. Particularly, aluminum or an aluminum compound is preferably added right before the start of the polycondensation reaction.

A method for adding a polymerization catalyst other than the phosphorus compound that is used in the present invention is not particularly limited, and such a polymerization catalyst may be added in powder form or neat form, or as a slurry or a solution of a solvent of, for example, ethylene glycol. The polymerization catalyst may be added as a mixture obtained by mixing at least one from aluminum, an aluminum compound, and a phosphorus compound with another component in advance, and these may be added separately. Alternatively, at least one from aluminum, an aluminum compound, and a phosphorus compound, and another component may be added to the polymerization system at the same time, or they may be added at different times. The entire amount of the polymerization catalyst may be added at one time or in multiple separate doses.

The polyester resin of the present invention obtained by polycondensation and subsequent solid-phase polymerization is preferably subjected to blow molding (preferably direct blow molding). In the blow molding to form a heat-resistant bottle, a bottomed precursor generally known as a preform is formed and the preform is stretched in a mold by blow molding followed by additional heat-set treatment, if needed. The preform is formed by methods such as compression molding and injection molding. For example, in the case of injection molding, the polyester resin is melted by heating at a temperature of from 250°C to 350°C and injected into a mold to form a preform. In general, a preform is in the shape of thick-walled test tube having a gate portion at its bottom portion and an opening portion processed for a screw-cap.

In the production of a heat-resistant bottle, the opening portion of the obtained preform may be crystallized. By crystallizing the opening portion, deformation of the opening portion can be prevented even when a bottle is filled with a high-temperature substance. The opening portion is crystallized by being heated at a temperature of preferably from 130°C to 200°C, and more preferably from 140°C to 190°C. Crystallization is conducted by a heating method with an infrared heater, hot air, induction heating, or immersion in an oil bath, and a heating method with an infrared heater is preferred from the point of productivity. The crystallization of the opening portion by heating may be performed after blow molding.

The preform is heated and subjected to stretching in the direction of the bottle length (longitudinal direction) simultaneously with blow molding in the circumferential direction to obtain a bottle. The preform is normally stretched in the length direction with a stretch rod and blow molded in the circumferential direction with air or pressurized gas such as nitrogen. The pressurized gas is blown at a pressure of preferably from 1 MPa to 10 MPa. Preferred is a method in which a preform is simultaneously stretched in both the length and circumferential directions by blowing pressurized gas along with the insertion of a stretch rod, however, a preform may be stretched in the length direction first and then stretched in the circumferential direction. The preform is heated with an infrared heater, hot air, or induction heating. The heating temperature is normally from 80°C to 130°C, and preferably from 90°C to 120°C.

The lower limit of the stretching ratio in the direction of the bottle length is preferably 1.5 times and more preferably 2 times. The stretching ratio of less than the range may cause nonuniform stretching. The upper limit of the stretching ratio in the direction of the bottle length is preferably 6 times, more preferably 5 times, and further preferably 4 times. The stretching ratio exceeding the range may cause a problem such as tearing.

The lower limit of the stretching ratio in the circumferential direction of the bottle is preferably 2 times and more preferably 2.5 times. The stretching ratio of less than the range may cause nonuniform stretching. The upper limit of the stretching ratio in the circumferential direction of the bottle is preferably 6 times, more preferably 5 times, and further preferably 4 times. The stretching ratio exceeding the range may cause a problem such as tearing.

In case where a heat-set treatment is subsequently conducted in the same mold after blow molding, the lower limit of a mold temperature in blow molding is preferably 80°C, more preferably 120°C, further preferably 130°C, and most preferably 140°C. When the temperature is less than the range, crystallization is not sufficiently promoted in the subsequent heat-setting process, leading to insufficient heat resistance or decreased productivity caused by the need to extend the heat-setting time.

The upper limit of a mold temperature is preferably 350°C, more preferably 340°C, further preferably 330°C, and particularly preferably 320°C. The lower limit of a mold temperature is preferably 280°C, more preferably 290°C, and further preferably 300°C.

The polyester resin of the present invention has a characteristic that the melt tension decreases with an increase in a temperature on melt. Therefore, when a mold temperature is set high, the melt tension of the polyester resin becomes decreased due to the contact between the polyester resin and the mold, decreasing the occurrence of melt fracture, and the melt tension of the polyester resin discharged from the mold becomes high, decreasing the generation of drawdown.

A blow molded bottle is subsequently subjected to heat-set treatment in a mold. The lower limit of the heat-set treatment time is preferably 0.5 seconds, more preferably 1 second, and further preferably 1.5 seconds. When the heat-set treatment time is less than the range, crystallization is not sufficiently promoted, resulting in insufficient heat resistance. The upper limit of the heat-set treatment time is preferably 15 seconds, more preferably 10 seconds, and further preferably 5 seconds. Longer heat-set time may lead to lower productivity, further, multiple molds are required in the case of a rotary type of blow molding machine, and large equipment is sometimes uneconomic. After the heat-set treatment

conducted in a mold, an additional heat-set treatment may be conducted by heating with infrared ray, hot air, or induction heating.

Alternatively, the blow molding may be performed by a method in which blow molding is performed in a mold set at a temperature of from 5°C to 50°C and subsequent heat-set treatment in the same mold. In the case, a mold temperature for heat-set treatment is the same as above mold temperature.

The equipment for blow molding may be provided with one mold or may be provided with multiple molds in case of mass production. These multiple molds sequentially move through different positions such as a position for setting a heated preform into a mold, a position for stretching, a position for heat-set treatment, and a position for ejecting bottle in this order, in a preferred manner.

In above description, explanation was given in the case of a cold parison method, in which a preform is cooled and then reheated, however, a bottle can be produced by a hot parison method, in which blow molding is performed without complete cooling of the preform.

The bottle is molded to have a bottle content of preferably from 200 mL to 6 L, and more preferably from 300 mL to 2 L. The body of the bottle may have any shape, such as circular, quadrilateral (including cut corners), and hexagonal shapes.

The polyester resin of the present invention is subjected to blow molding (preferably direct blow molding) and the resulting molded article is suitably used as a container (for example, bottles) for cosmetics, detergents, beverages, and the like.

## EXAMPLES

Hereinafter, the present invention will be specifically described with Examples, however, the scope of the present invention is not limited by Examples.

### Measurement of intrinsic viscosity IV of polyester resin

The polyester resin was dissolved into a mixed solution of p-chlorophenol/tetrachloroethane (3/1, weight ratio) and an intrinsic viscosity was measured at 30°C with an Ostwald viscometer.

### Measurement of polyester resin composition

The polyester resin dissolved in a solvent of chloroform-d was analyzed by $^1$H-NMR with Fourier transform nuclear magnetic resonance device (model: AVANCE 500, manufactured by Bruker) to determine compositions of the polyester resin from the resulting integration ratio.

### Measurement of melting point of polyester resin

In an aluminum sample pan, 5 mg of the polyester resin was placed, and the sample pan was closed with a lid. The sample pan with the lid was set to a differential scanning calorimeter (DSC, model: DSC-Q100, manufactured by TAInstruments) and measurement was conducted while heating the sample up to 300°C at a heating rate of 20°C/min. The maximum peak temperature of the heat of fusion was determined as a melting point of crystals.

### Evaluation of gel

(1) Preparation of hollow molded article

The polyester resin was dried with dehumidified air in a drier and molded into a preform with an injection molding machine (model: M-150C-DM, manufactured by MEIKI CO., LTD.) at a resin temperature of 290°C. An opening portion of the preform was crystallized by heating the portion with a self-built crystallizer for opening portion, and a pre-molded article was formed. The pre-molded article was then subjected to biaxial stretch blow molding with a molding machine (model: LB-01E, manufactured by SIG Corpoplast GmbH Co.) and subsequently fixed in a mold set at 150°C for approximately 5 seconds to form a container with a capacity of 1500 cc (hollow molded article). The stretching temperature was controlled at 100°C.

(2) Appearance of hollow molded article (investigation for foreign substance in the form of gel)

Visual inspection of 100 hollow molded articles as bottles was conducted for evaluation in accordance with the following criteria.

Good: the hollow molded articles were transparent, and no appearance problems were observed.
From Acceptable to Good: foreign substance in the form of gel was visually confirmed in one bottle out of 100 bottles.
Acceptable: foreign substance in the form of gel was visually confirmed in two bottles out of 100 bottles.
Bad: foreign substance in the form of gel was visually confirmed in three or more bottles out of 100 bottles.

Measurement of melt tension

The melt tension of the polyester resin was measured during molding with the following apparatus and conditions.

Temperature: 270°C
Capillary rheometer (manufactured by Toyo Seiki Seisaku-sho, Ltd.)
Capillary length: 10 mm
Capillary diameter: 1 mm
Shear rate: 243 $s^{-1}$
Maximum take-up speed : 200 m/min
Starting speed of take-up: 10 m/min
Take-up speed : 100 m/min (constant)
Time of take-up: 90 sec

Measurement of melt viscosity

The melt viscosity of the polyester resin was measured during molding with the following apparatus and conditions.

Capillary rheometer (manufactured by Toyo Seiki Seisaku-sho, Ltd.)
Capillary length: 10 mm
Capillary diameter: 1 mm
Temperature: 270°C
Shear rate: 30 $s^{-1}$ or 2000 $s^{-1}$

Measurement of acid value (terminal carboxyl group concentration (represented as acid value, unit: eq/ton))

Into 25 ml of benzyl alcohol, 0.5 g of the polyester resin was dissolved, and the resulting solution was titrated with 0.01 mol/l sodium hydroxide of benzyl alcohol solution. The indicator used was a solution prepared by dissolving 0.10 g of phenolphthalein into a mixed solution of 50 ml of ethanol and 50 ml of water.

Measurement for contents of aluminum atom, phosphorus atom, germanium atom, titanium atom, and zinc atom in polyester resin

To prepare a test piece, the polyester resin was melted by heating up to a temperature +20°C higher than the melting point of the polyester resin in a stainless circular ring with a thickness of 5 mm and an inner diameter of 50 mm. The test piece was subjected to X-ray fluorescence analysis to determine the atom contents. The results were expressed in ppm. The atom contents were determined from a standard curve predetermined with samples containing known quantities of the atoms.

Profile extrusion molding (evaluation of moldability (drawdown), mechanical properties, surface smoothness, and transparency)

A machine for profile extrusion molding was set up as follows. A die lip was affixed to a monoaxial extruder (L/D=30, equipped with a full flight screw, screw diameter: 50 mm), and a cylinder temperature was set to 270°C. Then, a sizing die for determination of final dimensions of a profile extrusion product was mounted on the tip of a cooling water bath, and a pulling machine was installed next to the water bath, completing the assembly of the equipment for profile extrusion molding. The polyester resin was molded with the machine, then the degree of drawdown during molding, the mechanical properties, the surface smoothness, and the transparency of the molded article were evaluated in accordance with the following criteria. The evaluation results are shown in Table 2.

Evaluation of moldability (drawdown)

The degree of drawdown was evaluated in accordance with the following criteria.

Very good: no hanging down of polyester resin was observed during molding and the shape was maintained.
Good: slight hanging down of polyester resin was observed during molding.
Acceptable: hanging down of polyester resin was observed during molding, making stable mass production difficult.
Bad: polyester resin could not pass through a die lip to a sizing mold due to hanging down of polyester resin.

Evaluation of mechanical properties (strength) of molded article

The molded article of the polyester resin was bent by 180° and evaluated in accordance with the following criteria.

Good: no cracks were identified upon observation with a 50x loupe.
Acceptable: no cracks were identified upon visual observation while cracks were identified upon observation with a 50x loupe.
Bad: cracks were identified upon visual observation.

Evaluation of surface smoothness

The smoothness of the outer surface of the molded article of the polyester resin was measured with a surfcorder (Et4000A, manufactured by Kosaka Laboratory Ltd.), and a three-dimensional center plane average surface roughness (SRa) was evaluated in accordance with the following criteria.

Very good: SRa of less than 0.10 μm.
Good: SRa of 0.10 pm or more and less than 0.12 μm.
From Acceptable to Good: SRa of 0.12 μm or more and less than 0.14 μm.
Acceptable: SRa of 0.14 μm or more and less than 0.15 μm.
Bad: SRa of 0.15 um or more.

Evaluation of transparency

A molded plate with a thickness of 7 mm was formed under the following conditions.

The polyester resin was dried under reduced pressure in a vacuum drying oven (model: DP61, manufactured by Yamato Scientific Co., Ltd.) in advance and the inside of a hopper for molding materials were purged with dry inert gas (nitrogen gas) to prevent moisture absorption during molding. The plasticization conditions for the M-150C-DM injection molding machine were as follows: rotation rate of feeding screw = 70%, rotation speed of screw = 120 rpm, back pressure = 0.5 MPa, and cylinder temperatures sequentially set at 45°C just below the hopper, 250°C at the next position, and 290°C for the rest portion of the cylinder including the nozzle. The injection conditions were adjusted so that the injection speed and the pressure holding speed would become 20% and the weight of the molded article would become 146 ± 0.2 g by controlling the injection pressure and the pressure holding, with the pressure holding adjusted by 0.5 MPa lower than the injection pressure. The upper limits of the injection time and the pressure holding time were set to 10 seconds and 7 seconds, respectively, the cooling time was set to 50 seconds, and the total cycle time, including the time for ejection of the molded article, was approximately 75 seconds. The temperature of the mold was controlled by continuous supply of cooling water with a water temperature of 10°C, and the surface temperature of the mold when the molding entered a stable period was around 22°C. After the introduction of the molding material and the replacement with resin in the injection molding machine, molding was started, and one molded plate was randomly selected for evaluation from the molded plates produced during stable period of from the 11th to 18th shots after the start.

Haze of the molded plate was measured with a haze meter (model: NDH2000, manufactured by NIPPON DENSHOKU INDUSTRIES CO., LTD.), and the transparency was evaluated in accordance with the following criteria.

Very good: haze of less than 5%.
Good: haze within the range of 5% or more and less than 8%.
From Acceptable to Good: haze within the range of 8% or more and less than 10%.
Bad: haze of 10% or more.

Chemical resistance

A molded plate with a thickness of 2 mm was produced by injection molding in the same manner as the molded plate produced for the above evaluation of transparency.

The molded plate thus obtained was immersed in ethanol at 60°C for 7 hours and visually evaluated in accordance with the following criteria.

Good: no changes were observed.
Acceptable: slight whitening was observed.
Bad: whitening was observed.

Evaluation of thermal oxidative stability (thermal oxidative degradation parameter (TOD))

The polyester resin in chip form ($[IV]_i$) was frozen and ground into powder with the size of 20-mesh or less. The powder was vacuum dried at 130°C for 12 hours, then 300 mg of the dried powder was put into a glass test tube with an inner diameter of about 8 mm and a length of about 140 mm, and the powder in the glass test tube was vacuum dried at 70°C for 12 hours. Subsequently, under the air dried by silica gel in a drying tube mounted to the upper portion of the glass test tube, the test tube containing the powder was immersed in a bath of nitrate at a temperature of 200°C for 15 minutes, and $[IV]_{f1}$ after heating was measured. TOD was determined as follows. In the specification, $[IV]_i$ represents an IV (dL/g) before the heat test, and $[IV]_{f1}$ represents an IV (dL/g) after the heat test, respectively. The polyester resin in chip form was frozen and ground with a freezer mill (model: 6750, manufactured by SPEX CentriPrep in U.S.A.). Approximately 2 g of the polyester resin in chip form and a special impactor were placed in a dedicated cell, and the cell was set to the mill. The mill was then filled with liquid nitrogen and kept for approximately 10 minutes, and the resin chips were ground at RATE 10 (i.e., the impactor was reciprocated 20 times per second) for 5 minutes.

$$TOD = 0.245 \{ [IV]_{f1}^{-1.47} - [IV]_i^{-1.47} \}$$

The polyester resin with a smaller TOD value has higher thermal oxidative stability.

Evaluation of thermal stability (thermal degradation parameter (TD))

In a glass test tube, 3 g of dried polyester resin chips were placed and the glass test tube containing the polyester resin chips was immersed in an oil bath set at 280°C for 120 minutes under nitrogen atmosphere to melt the polyester resin chips. Then, $[IV]_{f1}$ of the polyester resin after heating was measured. TD was determined as follows. In the specification, $[IV]_i$ represents an IV (dL/g) before the heat test, and $[IV]_{f1}$ represents an IV (dL/g) after the heat test, respectively.

$$TD = 0.245 \{ [IV]_{f1}^{-1.47} - [IV]_i^{-1.47} \}$$

The polyester resin with a smaller TD value has higher thermal stability.

Synthesis Examples 1 to 6 (Preparation of compounds (branching agents) represented by Chemical Formula (I))

A compound represented by Chemical Formula (I) was prepared in the system of 2-gallon reactor for free radical continuous polymerization with reference to descriptions in Patent Documents 1 to 3 and U.S. Patent Applications No. 09/354350 and No. 09/614402. The compositions and the weight average molecular weights of the compounds represented by Chemical Formula (I) obtained in Synthesis Examples 1 to 6 are shown in the following Table 1.

The weight average molecular weights of the compounds represented by Chemical Formula (I) were determined by GPC based on the standard polystyrene. Specifically, 4 mg of the compound represented by Chemical Formula (I) was weighed out, dissolved into 4 ml of a mixed solvent of chloroform and hexafluoroisopropanol (60/40, volume%), and filtrated through a membrane filter of 0.2 pm to obtain a sample solution. The sample solution was then subjected to measurement by GPC, and the weight average molecular weight was determined based on the standard polystyrene.

The values of l, m, and n recited in the compound represented by Chemical Formula (I) were determined through analyses by $^1H$-NMR and $^{13}C$-NMR.

The values of 1, m, and n represent average numbers expressed by integers obtained through rounding to one decimal place. Specifically, the sample of a compound represented by Chemical Formula (I) was dissolved into a mixed solvent of deuterated chloroform and trifluoroacetic acid (85/15, volume ratio) for $^1H$-NMR, and into a mixed solvent of

deuterated chloroform or deuterated chloroform and hexafluoroisopropanol (1/1, volume ratio) for $^{13}C$-NMR, respectively. After the samples were dissolved in each solution, the obtained solutions were subjected to measurement by Fourier transform nuclear magnetic resonance device (AVANCE NEO 600, manufactured by Bruker) under measurement conditions of room temperature and cumulative number of from 50 to 200 ($^{1}H$-NMR) and 10000 ($^{13}C$-NMR). Ratios of each component and components located at terminals were calculated from the spectra of $^{1}H$-NMR and $^{13}C$-NMR, and the values of l, m, and n were determined.

A methacrylic monomer having a structure represented by Chemical Formula (II) used in Synthesis Examples (hereinafter, merely DEMA-BD) can be obtained by the synthesis method in which glycidyl methacrylate undergoes a ring-opening reaction with water, followed by the addition of diol. The compound represented by Chemical Formula (I) may be obtained by the following synthesis method in which a copolymer of styrene and glycidyl methacrylate (additionally with methyl methacrylate, if needed) is synthesized in accordance with Patent Documents 1 to 3 and U.S. Patent Applications No. 09/354350 and No. 09/614402, followed by the addition of water and diol.

[Chemical Formula 5]

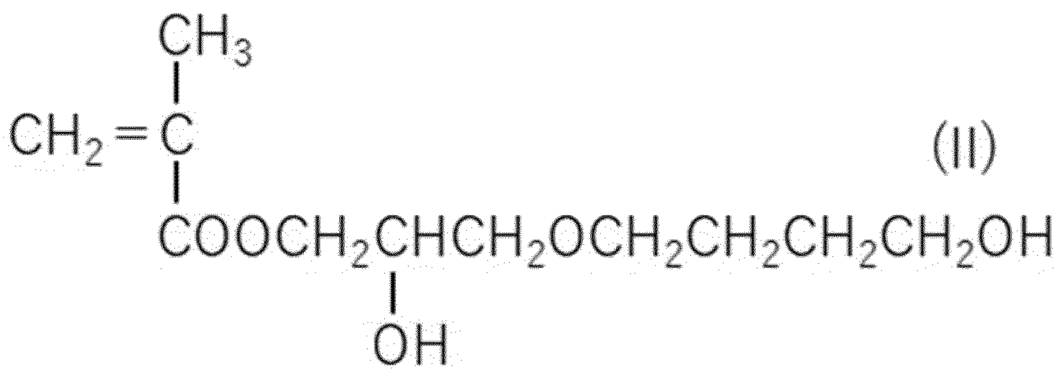

(II)

The abbreviations used in the following Table are as follows; STY represents styrene, MMA represents methyl methacrylate, and DEMA-BD represents a methacrylic monomer with the structure represented by Chemical Formula (II).

[Table 1]

| Synthesis Example | Composition | m | n | 1 | Weight average molecular weight |
|---|---|---|---|---|---|
| 1 | STY | 1 | | | 274 |
| | DEMA-BD | | 1 | | |
| 2 | STY | 5 | | | 972 |
| | DEMA-BD | | 2 | | |
| 3 | STY | 30 | | | 4024 |
| | DEMA-BD | | 4 | | |
| 4 | STY | 57 | | | 7514 |
| | DEMA-BD | | 9 | | |
| 5 | STY | 200 | | | 54700 |
| | DEMA-BD | | 150 | | |
| 6 | STY | 57 | | | 8067 |
| | DEMA-BD | | 9 | | |
| | MMA | | | 10 | |

Example 1

In a 10 L pressure vessel equipped with a stirrer, a thermometer, and a condenser for distillation, 2432 g of

terephthalic acid (manufactured by Mitsui Chemicals, Inc.), 2700 g of 1,4-butanediol, zinc acetate at a zinc atom content of 100 ppm, and 4 g of triethylamine (manufactured by NACALAI TESQUE, INC.) were charged, and esterification was performed at 240°C for 3.0 hours under a pressure of 0.35 MPa. The compound represented by Chemical Formula (I) obtained in Synthesis Example 1 was continuously added while controlling a flow velocity, so that an amount of the compound represented by Chemical Formula (I) would become 0.2 mass% based on 100 mass% of the alcohol component in the obtained polyester resin, and the reaction was proceeded stepwise.

Then, based on the mass of the polyester resin, as a polycondensation catalyst, aluminum acetate at aluminum atom content of 30 ppm and Irgamod 295 (manufactured by BASF) at phosphorus atom content of 72 ppm were added, followed by the addition of Solvent Blue 45 (manufactured by Clariant AG) at a content of 1 ppm with respect to the mass of the polyester resin. The mixture was stirred at 260°C for 5 minutes at an ambient pressure under nitrogen atmosphere. Subsequently, the mixture was heated up to 280°C over 60 minutes with a gradual decrease in the pressure of the reaction system to 13.3 Pa (0.1 Torr), and the polycondensation reaction was conducted at 280°C and at 13.3 Pa. Following pressure release, the polyester resin under fine pressure was discharged in strands into cold water, then rapidly cooled, and held in cold water for 20 seconds. After that, the polyester resin in strand form was cut to obtain cylinder-shaped polyester pellets having approximately 3 mm of length and 2 mm in diameter.

The polyester pellets obtained by melt polymerization were dried under reduced pressure (at 80°C and at 13.3 Pa or less, for 12 hours), and subjected to crystallization treatment (at 130°C and at 13.3 Pa or less, for 3 hours, followed by another 3 hours at 160°C and at 13.3 Pa or less). After cooling, the polyester pellets were subjected to solid-phase polymerization in a solid-phase polymerization reactor under conditions of a pressure kept at 13.3 Pa or less and a temperature kept from 200°C to 220°C. The evaluation results of the resulting polyester pellets are shown in Table 2.

Example 2

Polyester pellets were obtained by polymerization conducted under the same conditions as Example 1 except that the amount of addition of the compound represented by Chemical Formula (I) obtained in Synthesis Example 1 was changed to 0.001 mass% from the amount in Example 1.

Example 3

Polyester pellets were obtained by polymerization conducted under the same conditions as Example 1 except that the amount of addition of the compound represented by Chemical Formula (I) obtained in Synthesis Example 1 was changed to 4 mass% from the amount in Example 1.

Example 4

Polyester pellets were obtained by polymerization conducted under the same conditions as Example 1 except that the compound represented by Chemical Formula (I) obtained in Synthesis Example 1 was changed to the compound represented by Chemical Formula (I) obtained in Synthesis Example 2.

Example 5

Polyester pellets were obtained by polymerization conducted under the same conditions as Example 1 except that the compound represented by Chemical Formula (I) obtained in Synthesis Example 1 was changed to the compound represented by Chemical Formula (I) obtained in Synthesis Example 3.

Example 6

Polyester pellets were obtained by polymerization conducted under the same conditions as Example 1 except that the compound represented by Chemical Formula (I) obtained in Synthesis Example 1 was changed to the compound represented by Chemical Formula (I) obtained in Synthesis Example 4.

Example 7

Polyester pellets were obtained in a different manner from Example 1 in that the compound represented by Chemical Formula (I) obtained in Synthesis Example 1 was changed to the compound represented by Chemical Formula (I) obtained in Synthesis Example 5.

Example 8

Polyester pellets were obtained by polymerization conducted under the same conditions as Example 1 except that the compound represented by Formula (I) obtained in Synthesis Example 1 was changed to the compound represented by Chemical Formula (I) obtained in Synthesis Example 6.

Example 9

Polyester pellets were obtained by polymerization conducted under the same conditions as Example 1 except that the time for esterification was changed to 1.5 hours from that of Example 1.

Example 10

Polyester pellets were obtained by polymerization conducted under the same conditions as Example 1 except that the amount of 1,4-butanediol charged was decreased from 2700 g to 2000 g and the time for esterification was changed to 1.0 hour from that of Example 1.

Example 11

Polyester pellets were obtained by polymerization conducted under the same conditions as Example 1 except that the following polycondensation catalysts of zinc acetate, germanium dioxide, and triethyl phosphate were added in such a manner that the content of a zinc atom from zinc acetate would be 100 ppm, the content of a germanium atom from germanium dioxide would be 100 ppm, and the content of a phosphorus atom from triethyl phosphate would be 30 ppm based on the mass of the polyester resin.

Example 12

Polyester pellets were obtained by polymerization conducted under the same conditions as Example 1 except that the following polycondensation catalysts of tetrabutyl titanate and triethyl phosphate were added in such a manner that the content of a titanium atom from tetrabutyl titanate would be 10 ppm and the content of a phosphorus atom from triethyl phosphate would be 100 ppm with respect to the mass of the polyester resin.

Example 13

Polyester pellets were obtained by polymerization conducted under the same conditions as Example 1 except that the amount of ethylene glycol charged was changed so that the polyester resin would comprise 5 mol% of ethylene glycol based on 95 mol% of 1,4-butanediol as a diol component.

Example 14

Polyester pellets were obtained by polymerization conducted under the same conditions as Example 1 except that the amount of ethylene glycol charged was changed so that the polyester resin would comprise 13 mol% of ethylene glycol with respect to 87 mol% of 1,4-butanediol as a diol component.

Comparative Example 1

Polyester pellets were obtained by polymerization conducted under the same conditions as Example 1 except that the compound represented by Chemical Formula (I) was not added, and the following polycondensation catalysts of zinc acetate, germanium dioxide, and triethyl phosphate were added in such a manner that the content of a zinc atom from zinc acetate would be 100 ppm, the content of a germanium atom from germanium dioxide would be 100 ppm, and the content of a phosphorus atom from triethyl phosphate would be 30 ppm based on the mass of the polyester resin.

Comparative Example 2

Polyester pellets were obtained by polymerization conducted under the same conditions as Example 1 except that the amount of addition of the compound represented by Chemical Formula (I) obtained in Synthesis Example 1 was changed to 0.0001 mass%, and the following polycondensation catalysts of zinc acetate, germanium dioxide, and triethyl phosphate were added in such a manner that the content of a zinc atom from zinc acetate would be 100 ppm, the content

of a germanium atom from germanium dioxide would be 100 ppm, and the content of a phosphorus atom from triethyl phosphate would be 30 ppm based on the mass of the polyester resin.

Comparative Example 3

Polyester pellets were obtained by polymerization conducted under the same conditions as Example 1 except that the amount of addition of the compound represented by Chemical Formula (I) obtained in Synthesis Example 1 was changed to 6 mass%, and the following polycondensation catalysts of zinc acetate, germanium dioxide, and triethyl phosphate were added in such a manner that the content of a zinc atom from zinc acetate would be 100 ppm, the content of a germanium atom from germanium dioxide would be 100 ppm, and the content of a phosphorus atom from triethyl phosphate would be 30 ppm based on the mass of the polyester resin.

Comparative Example 4

Polyester pellets were obtained by polymerization conducted under the same conditions as Example 1 except that the following polycondensation catalysts of zinc acetate, germanium dioxide, and triethyl phosphate were added in such a manner that the content of a zinc atom from zinc acetate would be 100 ppm, the content of a germanium atom from germanium dioxide would be 100 ppm, and the content of a phosphorus atom from triethyl phosphate would be 30 ppm based on the mass of the polyester resin, and the amount of ethylene glycol charged was changed so that the polyester resin would comprise 25 mol% of ethylene glycol with respect to 75 mol% of 1,4-butanediol as a diol component.

Comparative Example 5

Polyester pellets were obtained by polymerization conducted under the same conditions as Comparative Example 1 except that glycol component was changed so that the polyester resin would comprise 100 mol% of ethylene glycol.

[Table 2]

| | Resin | | | | | | | | | | | Melt viscosity properties | | Molded article | | | | |
|---|---|---|---|---|---|---|---|---|---|---|---|---|---|---|---|---|---|---|
| | IV | AV | 1,4BD | EQ | Catalysts | Branching agent | | Melting point | Gel | TD | TOD | Take-up speed | Melt tension | Drawdown | Chemical resistance | Strength | Surface smoothness | Transparency |
| | dl/g | eq/lt | mol% | mol% | | Type | wt% | °C | | % | % | m/min | mN | | | | | |
| Example 1 | 1.18 | 15 | 100 | 0 | Al/P/Zn | Synthesis Example 1 | 0.2 | 224 | Good | 0.44 | 0.016 | 100 | 40.2 | Good | Good | Good | Good | Good |
| Example 2 | 1.17 | 20 | 100 | 0 | Al/P/Zn | Synthesis Example 1 | 0.001 | 225 | Good | 0.48 | 0.015 | 100 | 17.9 | Good | Good | Good | Good | Good |
| Example 3 | 1.20 | 20 | 100 | 0 | Al/P/Zn | Synthesis Example 1 | 4 | 221 | From Acceptable to Good | 0.21 | 0.010 | 100 | 51.2 | Very good | Good | Good | Good | Good |
| Example 4 | 1.20 | 18 | 100 | 0 | Al/P/Zn | Synthesis Example 2 | 0.2 | 224 | Good | 0.41 | 0.018 | 100 | 39.0 | Good | Good | Good | Good | Good |
| Example 5 | 1.15 | 19 | 100 | 0 | Al/P/Zn | Synthesis Example 3 | 0.2 | 224 | Good | 0.41 | 0.018 | 100 | 41.5 | Good | Good | Good | Good | Good |
| Example 6 | 1.14 | 17 | 100 | 0 | Al/P/Zn | Synthesis Example 4 | 0.2 | 224 | Good | 0.43 | 0.018 | 100 | 41.6 | Good | Good | Good | Good | Good |
| Example 7 | 1.09 | 20 | 100 | 0 | Al/P/Zn | Synthesis Example 5 | 0.2 | 224 | Good | 0.44 | 0.016 | 100 | 43.8 | Good | Good | Good | Good | Good |
| Example 8 | 1.08 | 19 | 100 | 0 | Al/P/Zn | Synthesis Example 6 | 0.2 | 224 | Good | 0.43 | 0.018 | 100 | 40.8 | Good | Good | Good | Very good | Good |
| Example 9 | 1.18 | 45 | 100 | 0 | Al/P/Zn | Synthesis Example 1 | 0.2 | 224 | From Acceptable to Good | 0.47 | 0.020 | 100 | 40.9 | Good | Good | Good | From Acceptable to Good | Good |

(continued)

| | Resin | | | | | | | | | | | Melt viscosity properties | | Molded article | | | | |
|---|---|---|---|---|---|---|---|---|---|---|---|---|---|---|---|---|---|---|
| | IV | AV | 1,4BD | EQ | Catalysts | Branching agent | | Melting point | Gel | TD | TOD | Take-up speed | Melt tension | Drawdown | Chemical resistance | Strength | Surface smoothness | Transparency |
| | dl/g | eq/lt | mol% | mol% | | Type | wt% | °C | | % | % | m/min | mN | | | | | |
| Example 10 | 1.05 | 110 | 100 | 0 | Al/P/Zn | Synthesis Example 1 | 0.2 | 224 | Acceptable | 0.49 | 0.025 | 100 | 41.9 | Good | Good | Good | Acceptable | From Acceptable to Good |
| Example 11 | 1.18 | 30 | 100 | 0 | Ge/P/Zn | Synthesis Example 1 | 0.2 | 224 | Good | 0.45 | 0.330 | 100 | 41.0 | Good | Good | Good | Good | Good |
| Example 12 | 1.18 | 31 | 100 | 0 | Ti/P | Synthesis Example 1 | 0.2 | 224 | Good | 0.49 | 0.360 | 100 | 40.2 | Good | Good | Good | Good | Good |
| Example 13 | 1.17 | 15 | 95 | 6 | Al/P/Zn | Synthesis Example 1 | 0.2 | 224 | Good | 0.45 | 0.150 | 100 | 39.0 | Good | Good | Good | Good | From Acceptable to Good |
| Example 14 | 1.16 | 15 | 87 | 13 | Al/P/Zn | Synthesis Example 1 | 0.2 | 215 | Good | 0.49 | 0.150 | 100 | 13.8 | Acceptable | Acceptable | Acceptable | Good | Good |
| Comparative Example 1 | 1.19 | 15 | 100 | 0 | Ge/Zn/P | N/A | 0 | 224 | Good | 0.59 | 0.420 | 100 | 9.9 | Bad | Good | Good | Very good | Good |
| Comparative Example 2 | 1.22 | 17 | 100 | 0 | Ge/Zn/P | Synthesis Example 1 | 0.0001 | 225 | Good | 0.67 | 0.430 | 100 | 9.9 | Bad | Good | Good | Good | Good |
| Comparative Example 3 | 1.11 | 18 | 100 | 0 | Ge/Zn/P | Synthesis Example 1 | 6 | 225 | Bad | N/A | N/A | N/A | N/A | N/A | N/A | N/A | N/A | N/A |

(continued)

| | Resin | | | | | | | | | | | Melt viscosity properties | | Molded article | | | | |
|---|---|---|---|---|---|---|---|---|---|---|---|---|---|---|---|---|---|---|
| | IV | AV | 1,4BD | EQ | Catalysts | Branching agent | | Melting point | Gel | TD | TOD | Take-up speed | Melt tension | Drawdown | Chemical resistance | Strength | Surface smoothness | Transparency |
| | dl/g | eq/lt | mol% | mol% | | Type | wt% | °C | | % | % | m/min | mN | | | | | |
| Comparative Example 4 | 1.12 | 17 | 75 | 25 | Ge/Zn/P | Synthesis Example 1 | 0.2 | 206 | Good | 0.25 | 0.430 | 100 | 35.4 | Acceptable | Bad | Bad | Good | Very good |
| Comparative Example 5 | 1.10 | 16 | 0 | 100 | Ge/Zn/P | Synthesis Example 1 | 0 | 255 | Good | 0.55 | 0.450 | 100 | 15.5 | Bad | Acceptable | Good | Good | Good |

- 1,4-BD represents 1,4-butanediol and EG represents ethylene glycol.
- In Comparative Example 3, gelatinization was so severe that each evaluation was not performed.

In Examples 1 to 14, each polyester resin had a melt viscosity of 26000 dPa s or more as measured under conditions of a temperature of 270°C and a shear rate of 30 $s^{-1}$, and a melt viscosity of 6500 dPa s or less as measured under conditions of a temperature of 270°C and a shear rate of 2000 $s^{-1}$.

INDUSTRIAL APPLICABILITY

The polyester resin of the present invention enables improvements in moldability in extrusion molding, profile extrusion molding, direct blow molding, inflation molding, injection blow molding, and calendaring which require high melt tension. Additionally, the polyester resin of the present invention enables improvement in mechanical properties while maintaining transparency. Therefore, the polyester resin of the present invention is expected to contribute significantly to the industry.

## Claims

1. A polyester resin comprising a constituent moiety derived from terephthalic acid as a dicarboxylic acid component and constituent moieties derived from each of ethylene glycol, 1,4-butanediol, and a compound represented by the following Chemical Formula (I) as an alcohol component,
   wherein the dicarboxylic acid component comprises from 85 mol% to 100 mol% of terephthalic acid, the alcohol component comprises from 85 mol% to 100 mol% of 1,4-butanediol based on a total amount of ethylene glycol and 1,4-butanediol, and the alcohol component comprises from 0.001 mass% to 5 mass% of the compound represented by Chemical Formula (I) in 100 mass% of the alcohol component:

   [Chemical Formula 1]

   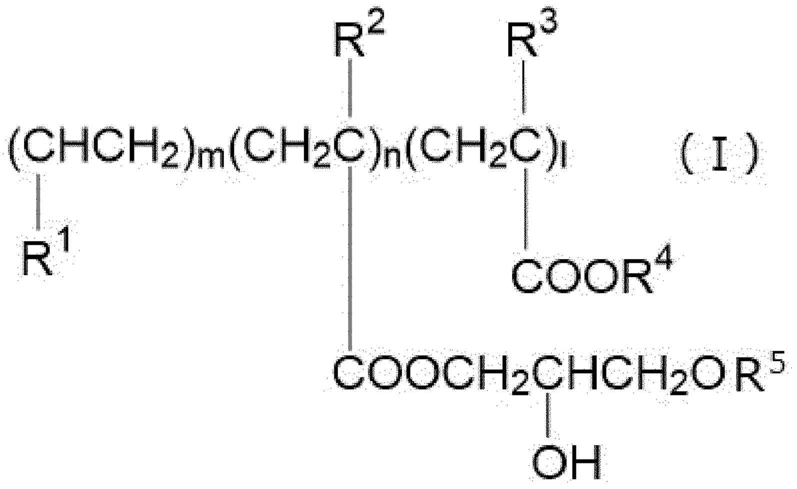

   (I)

   wherein in the Formula (I),
   m and n each represent an integer of from 1 to 1000, 1 represents an integer of from 0 to 1000, $R^1$ represents an aromatic hydrocarbon group having 6 to 20 carbon atoms, $R^2$, $R^3$, and $R^4$ each represent a hydrogen atom or an alkyl group having 1 to 10 carbon atoms, and $R^5$ represents a mono-ol having 4 carbon atoms represented as $CH_2CH_2CH_2CH_2OH$.

2. The polyester resin according to claim 1, wherein the compound represented by Chemical Formula (I) has a weight average molecular weight of 275 or more and 500000 or less.

3. The polyester resin according to claim 1 or 2, wherein the polyester resin has a melt tension of 15 mN or more as measured under conditions of a temperature of 270°C, a take-up speed of 100 m/min, and a shear rate of 243 $s^{-1}$.

4. The polyester resin according to claim 1 or 2, wherein the polyester resin has a melt viscosity of 26000 dPa s or more as measured under conditions of a temperature of 270°C and a shear rate of 30 $s^{-1}$ and 6500 dPa s or less as measured under conditions of a temperature of 270°C and a shear rate of 2000 $s^{-1}$

**INTERNATIONAL SEARCH REPORT**

International application No.
**PCT/JP2022/035458**

**A. CLASSIFICATION OF SUBJECT MATTER**

***C08G 63/20***(2006.01)i; ***C08G 63/183***(2006.01)i
FI: C08G63/20; C08G63/183

According to International Patent Classification (IPC) or to both national classification and IPC

**B. FIELDS SEARCHED**

Minimum documentation searched (classification system followed by classification symbols)

C08G63/20; C08G63/183

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| P, A | WO 2022/131220 A1 (TOYOBO CO., LTD.) 23 June 2022 (2022-06-23) entire text | 1-4 |
| P, A | WO 2022/131219 A1 (TOYOBO CO., LTD.) 23 June 2022 (2022-06-23) entire text | 1-4 |
| P, A | WO 2022/131218 A1 (TOYOBO CO., LTD.) 23 June 2022 (2022-06-23) entire text | 1-4 |
| A | JP 2013-500355 A (BASF CORPORATION) 07 January 2013 (2013-01-07) entire text | 1-4 |
| A | JP 2013-530300 A (BASF SE) 25 July 2013 (2013-07-25) entire text | 1-4 |
| A | JP 5-112701 A (POLYPLASTICS CO., LTD.) 07 May 1993 (1993-05-07) entire text | 1-4 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/035458**

| Patent document cited in search report | Publication date (day/month/year) | Patent family member(s) | Publication date (day/month/year) |
|---|---|---|---|
| WO 2022/131220 A1 | 23 June 2022 | (Family: none) | |
| WO 2022/131219 A1 | 23 June 2022 | (Family: none) | |
| WO 2022/131218 A1 | 23 June 2022 | (Family: none) | |
| JP 2013-500355 A | 07 January 2013 | US 2012/0184678 A1<br>entire text<br>WO 2011/011498 A2<br>EP 2456792 A2<br>KR 10-2012-0089238 A<br>CN 102844336 A | |
| JP 2013-530300 A | 25 July 2013 | US 2013/0115402 A1<br>entire text<br>WO 2012/007958 A1<br>EP 2593494 A1<br>KR 10-2013-0041205 A<br>CN 103154078 A | |
| JP 5-112701 A | 07 May 1993 | US 5523135 A<br>entire text<br>KR 10-1993-0008062 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5931061 B
- JP 5941843 B
- JP 2016056384 A
- US 354350
- US 09614402
- US 09614402 B